Europäisches Patentamt

European Patent Office

Office européen des brevets

(11) Publication number: **0 412 598 A2**

# EUROPEAN PATENT APPLICATION

(21) Application number: 90202064.3

(51) Int. Cl.⁵: **G01G 19/22**

(22) Date of filing: 27.07.90

(30) Priority: 09.08.89 IT 2148689

(43) Date of publication of application:
**13.02.91 Bulletin 91/07**

(84) Designated Contracting States:
**AT BE CH DE DK ES FR GB GR LI LU NL SE**

(71) Applicant: **TERMOELETTRONICA S.P.A.**
**Via Petrarca**
**I-24052 Azzano S. Paolo, Bergamo(IT)**

(72) Inventor: **Pesenti, Giorgio**
**Via Lotto 19**
**I-24010 Ponteranica (Bergamo)(IT)**

(74) Representative: **De Carli, Erberto et al**
**ING. BARZANO' & ZANARDO MILANO S.p.A.**
**Via Borgonuovo, 10**
**I-20121 Milano(IT)**

(54) **Apparatus for automatically metering fluid substances, in particular dyes and the like for dye-works and printing-works.**

(57) An apparatus for automatically metering fluid substances, such as dyes and the like, comprises a metering cabinet in which metering valves for metering the substances are arranged above a collecting vessel placed on a balance. The valves are installed at the ends of respective withdrawal hosepipes coming from respective containers for the substances stored in a warehouse, or in a plurality of warehouses situated separate in space from the cabinet. Along the hosepipes, conveyor pumps are installed. The warehouse can also be arranged at lower levels than the metering valves. Under the collecting vessel, inside the metering cabinet, at least one dilution and/or mixing vessel is placed, from which the properly metered product is delivered to a feed unit arranged outside the cabinet. The operation of the metering valves is automatically controlled by means of a proper microprocessor-controlled apparatus as a function of the weighing data.

**Fig.3**

## APPARATUS FOR AUTOMATICALLY METERING FLUID SUBSTANCES, IN PARTICULAR DYES AND THE LIKE FOR DYE-WORKS AND PRINTING-WORKS

The present invention relates to an apparatus for automatically metering fluid substances, in particular dyes and the like for dye-works and printing-works.

In the following, the present invention is disclosed by referring to the metering of dyes in use in dye-works and in printing-works, but it should be understood that the invention is not limited to this particular field, in that it can be generally applied for the metering of any fluid substances coming from respective containers and destined to be collected in metered amounts and mixed together with one another in order to be subsequently used.

The apparatuses known from the prior art for the automatic metering of dyes comprise an overhead warehouse in which a plurality of containers are stored, which contain the various dyes at predetermined, checked, known concentrations.

From each one of the containers a relevand duct departs, leading to a withdrawal area, wherein a collecting vessel is installed. Each duct is equipped with a metering valve, whose opening and closure is automatically controlled by a central control unit as a function of the required amount, i.e., weight of the dye. The collecting vessel is situated at a lower level than of the warehouse and therefore each of the relevant dyes comes to the mouth of its respective duct by gravity.

The collecting vessel is generally placed on a balance, normally an electronic balance, which, by carrying out successive weighings as the various dyes come to the collecting vessel, determines from time to time the weight of the dye charged to said vessel and hence supplies the central processing unit with the necessary data in order to command the closing of the respective metering valve when the pre-established weight of the relevant dye is reached. The sequential intervention of the various valves is commanded by the same central control unit on the basis of the required types of dyes.

The vessel and the balance can be either fixed or mobile. In this latter can, they can run along guides or the like in order to reach a plurality of withdrawal areas, a feature which makes it possible the length of the ducts used in order to withdraw the dyes, to be reduced.

The vessel to which the metered amounts of dyes are charged is then either manually or automatically moved under one or more mixing, and possible dilution, stations and then is sent to the dyeing or printing machines where the prepared substance is used.

The containers of the dyes can have different shapes, but these are always so studied that a maximum number of containers can be stored inside a minimum room, in that the surface-area of the overhead warehouse is limited.

The need of grouping said containers inside a raised, small-surface-area position causes anyway the content of each of said containers to be reduced to a few hundred litres at maximum.

On the other hand, it is necessary that the warehouse be arranged in an overhead position in order to have a certain difference in level relatively to the level of the collecting vessel, so as to generate a head which is sufficient in order to rapidly transfer from the containers to the collecting vessel even very viscous liquids, as in particular are the printing pastes and some dyeing or printing auxiliaries.

It is also important to underline the fact that in order not to dirty excessively long stretches of the ducts, the present trend in this field is of installing said ducts with their relevant metering valves and the balance with the collecting vessel inside volumes which are as small as possible. The arrangement of the ducts and of the valves as a circle around the collecting vessel kept in a central position shows the advantage that it is not necessary to move the vessel on a slide, or on another conveyor device, in order to bring it under each one of the valves distributed along the trajectory of the same vessel; unfortunately, such a kind of arrangement suffers anyway from the drawback that the maximum number of overhead installed containers and of metering valves is limited.

Due to these reasons, the metering apparatuses known from the prior art have always limited capacities relatively to the requirements of manufacturing machinery.

The main purpose of the instant invention is of providing a metering apparatus of the initially cited type, suitable in particular for use in dyeing-works and in printing-works, which metering apparatus overcomes this serious drawback of the apparatuses known from the prior art, making it possible an extremely large number of containers of even large capacity to be stored in the warehouse, and without the use of vessels and balances mobile along the apparatus being required, with the possibility of a completely automatic management of the metering being simultaneously retained.

Within this scope, the present Applicant is furthermore desirous of providing an apparatus which can be used also jointly with the presently installed overhead warehouses, such as not to require these latter to be eliminated, or the containers of the apparatus to be previously charged with the contents of the containers presently existing in the overhead warehouse.

In view of the solution of these purposes according to the present invention an apparatus is proposed for automatically metering fluid substances, in particular dyes, auxiliaries and the like for dyeing-works and printing-works, associated with a warehouse in which a plurality of containers of the substances to be metered are stored, with said apparatus comprising a plurality of withdrawal ducts, each connected with a respective container and equipped with a metering valve for withdrawing metered amounts of the various substances, at least one collecting vessel for collecting the various substances in metered amounts, at least one balance for weighing the substances charged to the collecting vessel or vessels, means for mixing the metered substances, and means for controlling the opening and the closure of said metering valves as a function of the weight of the substances charged to the collecting vessel or vessels, characterized in that at least the metering valves, the collecting vessel or vessels, the balance(s) and, preferably, also the mixing means are contained inside a metering cabinet to which the individual ducts lead, and that the warehouse is situated separate in space from the metering cabinet and that pumps for conveying the substances are installed in the ducts.

Further details and the advantages of the instant invention will result clearer from the following disclosure of a preferred, non-exclusive form of practical embodiment of the same invention supplied for merely exemplifying purposes and illustrated in the hereto attached drawings, in which:

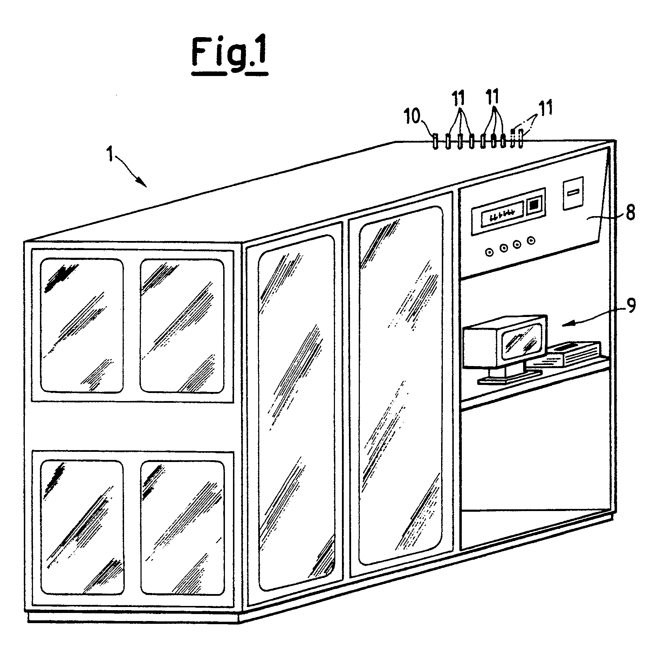

Figure 1 schematically shows a perspective view of the metering cabinet;

Figure 2 shows a schematic view of the interior of the cabinet, as viewed from the side wherein the collecting and dilution vessels are placed;

Figure 3 shows a functional scheme of the apparatus arranged inside the metering cabinet;

Figure 4 shows a scheme of a warehouse, constituted by a plurality of distinct warehouse areas, and the connections with the metering cabinet.

Referring to the above said figures, an apparatus for automaticcaly metering fluid substances and in particular dyes and other similar products of the dyeing and printing industry, comprises a metering cabinet 1, preferably of parallelepipedal shape, inside which on one side metering valves 2 are contained, which make it possible metered amounts to be withdrawn and charged to a collecting vessel 3, situated under the valves 2 on a balance 4, such as, e.g., an electronic balance. With the vessel 3 two dilution vessels 5 and 6 are associated, which are placed under the collecting vessel 3. The outlets from the vessels 5 and 6 merge into an outlet duct 7 for the metered substance. Furthermore, mixing means are associated with the vessels 5 and 6. Such mixing means are not illustrated in detail, in thet they are of a *per se* known type.

The central portion of the cabinet 1 substantially houses a manual metering/withdrawal unit, disclosed in greater detail in the following, and inside the right portion of the cabinet 1, for example an electronic control microprocessor unit 8 and actuation and/or display means 9 for visually displaying the operation of the metering cabinet 1 are installed on the front side.

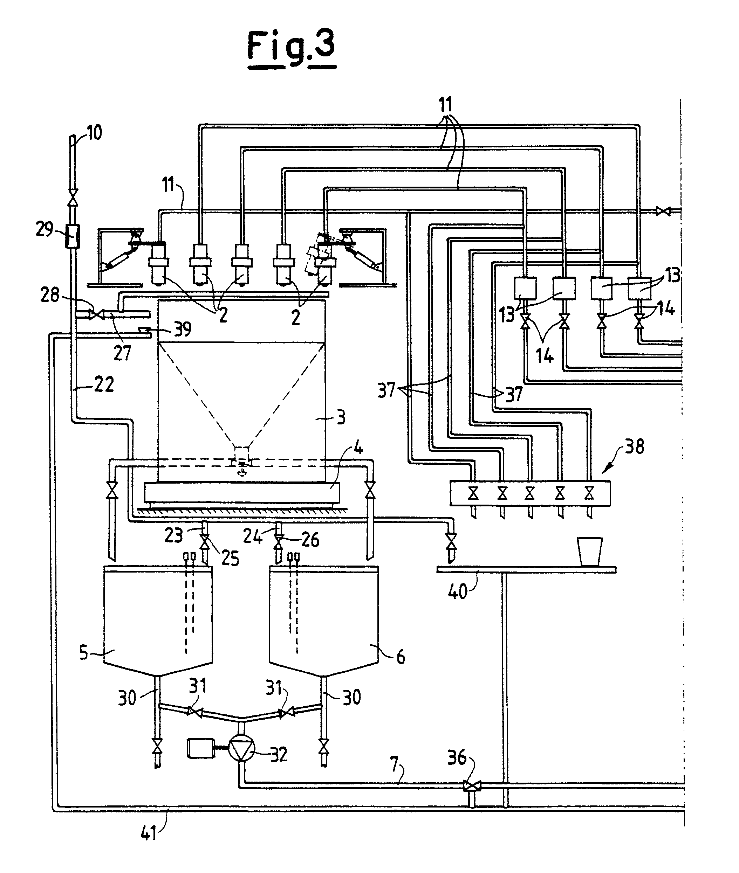

To the cabinet 1 the ducts 10 arrive, which are destined to convey a washing or dilution liquid (the duct 10), and the dyes or the like (the ducts 11). These latter come from a warehouse which is discussed in the following and which, according to a feature of the instant invention, is situated separate in space from the metering cabinet 1. Still according to a feature of the instant invention, in the ducts 11 which from the containers 12 housed inside the warehouse lead to the metering valves 2, delivery pumps 13 are installed (Figure 3). In that way, it is possible to dispose of warehouses which are situated in a different position from the traditional overhead position, and precisely also at a lower level than the metering valves 2 and/or the collecting vessel 3, and additionally even in a very far away position from the cabinet 1, with the structure of the apparatus, which no longer needs ovehead lofts, or other warehouse support structures, being considerably simplified. The pumps 13 can be advantageously arranged inside the interior of the cabinet 1, in the right-hand top portion behind the apparatus 8.

Inside the cabinet 1, in the ducts 12 upstream the pumps 13 manual on-off valves 14 are installed.

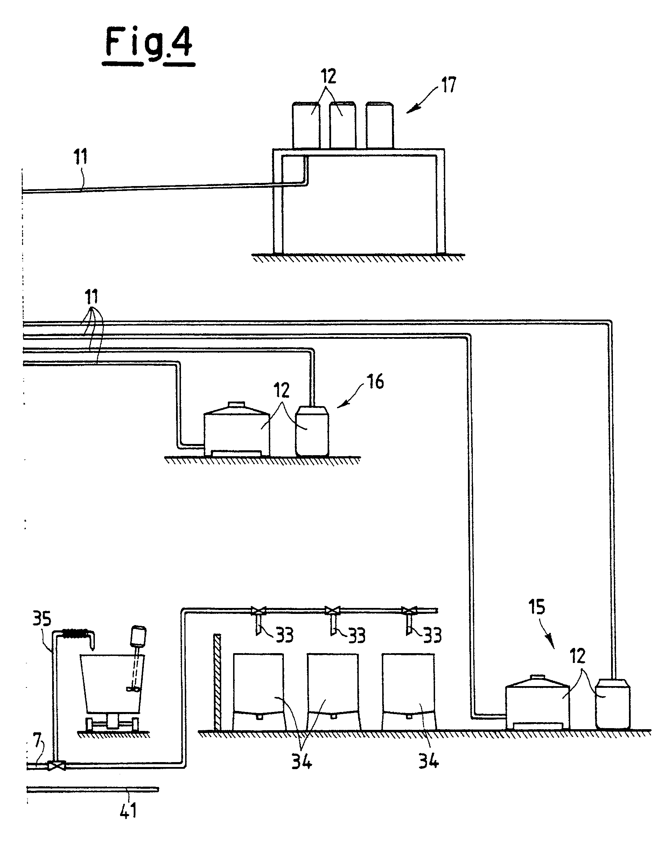

Figure 4 shows, for exemplifying purposes, the arrangement of a warehouse at several heights, or of a plurality of warehouses or warehouse areas 15, 16, 17 at several heights, in particular a warehouse area 15 at floor height, a warehouse area 16 at an intermediate height, and a warehouse area 17 at a raised level. Of course, the feed ducts 11 coming from warehouse areas which are at a higher level than of the metering valves 2 do not require any delivery pumps 13.

According to the most suitable arrangement of the warehouse or of the provided warehouse areas, the ducts 11, which advantageously can be hosepipes of a few centimetres of diameter, and of low weight, can be caused to slide along raceways or close by walls without any special engineering problems, which on the contrary are caused by the fixed pipes which generally connect the preparation stations and the mixing stations with the user machines.

It should be observed that the ducts 11 need not be cleaned after every usage, in that they are used in order to deliver one substance only.

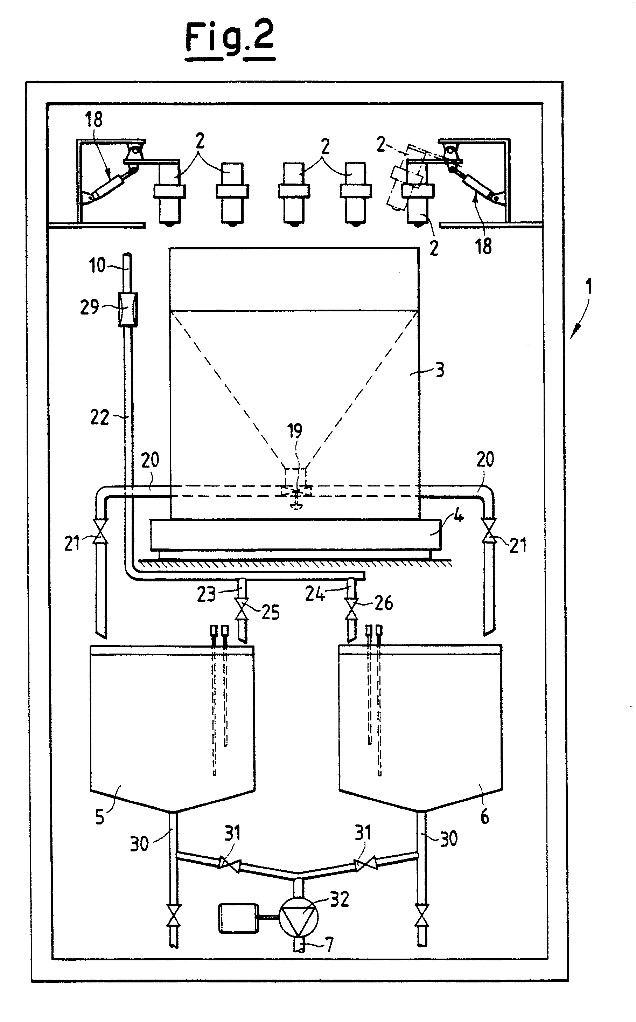

The metering valves 2, of a per se known type, are arranged side-by-side to each other along a plurality of rows over the mouth of the collecting vessel 3. Advantageously, the peripheral metering valves 2, due to room reasons, are placed along the peripheral edge of the vessel 3 and can be orientated towards the interior of the vessel 3, as schematically shown in Figure 2. For that purpose, respective pneumatic cylinder-ram units 18 can be provided.

The vessel 3, whose interior is preferably given a funnel shape, is stably positioned on the balance 4, and both of said vessel and balance are stationary inside the metering cabinet 1.

At the bottom of the collecting vessel 3 a three-way discharge valve 19 is provided. From said valve 19 two discharge ducts 20 branch off. Said discharge ducts 20 are equipped with on-off valves 21 and each of them ends over a respective dilution vessel 5, 6. In that way, with the collecting vessel 3 two dilution vessels 5, 6 --positioned under the same vessel 3 -- are stably associated. The capacity of the vessels 5, 6 is larger than of the vessel 3. Advantageously, the two vessels 5, 6 can be alternatively used in combination with the collecting vessel 3.

With the two dilution vessels 5, 6, also installed inside the cabinet 1 as stationary vessels, a delivery system for delivering dilution/washing water is associated. Said water delivery system comprises a water feed duct 22 from which the ducts 23, 24 branch off. These latter feed water to the vessels 5, 6 through respective on-off valves 25, 26. From the water feed duct 22 also a washing duct 27 branches off, which makes it possible the vessel 3 to be washed. The washing duct 27 is equipped with the on-off valve 28. In the duct 22 a volumetric meter 29 is installed, in order to display the consumption of water, or the amount of water used for dilution purposes.

The discharge ducts 30 leaving from the dilution vessels 5, 6 are equipped with on-off valves 31 and merge into the outlet duct 7 in which a pump 32 is installed, by means of which the metered and mixed dye is delivered to withdrawal mouths 33 in order to be used. Here, the metered and mixed dye can be collected inside containers 34, e.g., mobile containers, in order to be subsequently transported to the user machines.

From the duct 7 a duct for manual withdrawal 35 branches off, which makes it possible the metered substance to be withdrawn. Finally, in the duct 7 a drain valve 36 is provided upstream the branching.

Downstream the pumps 13, from the ducts 11 respective ducts 37 branch off, which lead to a manual-withdrawal unit 38, provided in order to make it possible limited amounts of the individual dyes to be withdrawn, e.g., for laboratory uses.

With the reference numerals 39 and 40, drop-collecting means are indicated, which are connected with the drain duct 41.

One will understand that by selectively actuating the metering valves 2 for determined time periods, the perfect metering of the components in the collecting vessel 3 is obtained. The actuation command is emitted on the basis of the result of the weighing by the balance 4, the data generated by which are supplied in the form of signals to a central control unit which constitutes a part of the apparatus 8. The dilution is carried out by acting on the valves 25, 26 and is a volumetric dilution carried out on the basis of the data coming from the volumetric meter 29.

All of the operations are carried out automatically. The characteristic data of the composition which one is willing to obtain is preset by being input to the microprocessor of the control unit. During the process of weighing of the collecting vessel 3 the microprocessor receives the progressively measured data and compared it to the stored data in order to establish the time of opening of the metering valves 2. As soon as the required weight -- and therefore the required amount of the metered substance is reached, the microprocessor sends the commands of closure of the relevant metering valves 2 and of stopping of the relevant pumps 13. The opening of the valves 2 and the starting of the relevant pumps 13 takes place is succession, as the metering of the preceding dye is completed. Then the microprocessor sends the commands of actuation of either or of both of the valves 21, in order to send the contents of the vessel 3 to either, or to both of the dilution vessels 5, 6, the commands of actuation of the valves for delivering the required volume of dilution water, as well as the commands of actuation of the valves for discharging the vessels 5 and 6 through the pump 32 and the opening of the valve(s) for substance withdrawal through the mouths 33. The control electronic unit also provides for the vessels to be washed, still by suitably commanding the opening and the closure of the relevant valves installed in the facility. Accomplishing such a control system is within the reach of those skilled in the art, and therefore does not require any further special considerations.

The pumps 13 can advantageously be membrane pumps, so as to make it possible also very viscous substances, such as soaps, detergents, and the like -- which are always difficultly metered in the normal, gravity-operating systems -- to be successfully metered.

As one will understand from the foregoing, with an apparatus according to the present invention no limitations practically exist any longer as regards the number and the capacity (whether small or large) of the containers for the substances to be used, or the distance between the containers and the metering/weighing centre. Should a very large number of containers be required in the warehouse, also two or more cabinets according to the invention could be coupled, with the arrangement of the large number of containers remaining absolutely free. There is nothing to prevent also the already existing dye and auxiliary warehouses from being used with the equipment according to the present invention, without said existing warehouses having to be dismantled, or the contents of containers stored in existing warehouses having to be transferred into containers of a warehouse of an apparatus according to the instant invention.

Furthermore, the same apparatus makes it possible small amounts for laboratory purposes to be withdrawn by means of separate metering valves.

Of course, within the scope of the instant invention, supplying many modifications and variants is possible. So, e.g., in a same cabinet more than one collecting vessels 3 could be installed, or with the vessel 3 one single dilution vessel could be associated.

**Claims**

1. Apparatus for automatically metering fluid substances, in particular dyes, auxiliaries and the like for dyeing-works and printing-works, associated with a warehouse in which a plurality of containers of the substances to be metered are stored, with said apparatus comprising a plurality of withdrawal ducts, each connected with a respective container and equipped with a metering valve in order to withdraw metered amounts of the various substances, at least one collecting vessel for collecting the various substances in metered amounts, at least one balance for weighing the substances charged to the collecting vessel or vessels, means for mixing the metered substances, and means for controlling the opening and the closure of said metering valves as a function of the weight of the substances charged to the collecting vessel or vessels, characterized in that at least the metering valves, the collecting vessel or vessels, the balance(s) and, preferably, also the mixing means are contained inside a metering cabinet to which the individual ducts lead, and that the warehouse is arranged separate in space from the metering cabinet and that pumps for conveying the substances are installed in the ducts.

2. Apparatus according to claim 1, characterized in that the pumps are installed inside the metering cabinet.

3. Apparatus according to claim 1 or 2, characterized in that the pumps are membrane pumps.

4. Apparatus according to one of the preceding claims, characterized in that the warehouse is placed at a lower level than of the metering valves and/or of the collecting vessel(s).

5. Apparatus according to one of the preceding claims, characterized in that the collecting vessel(s) and the balance(s) are installed stationary inside said metering cabinet.

6. Apparatus according to one of the preceding claims, characterized in that the metering valves are arranged side-by-side above the mouth of said collecting vessel(s).

7. Apparatus according to one of the preceding claims, characterized in that with the collecting vessel or with each one of the collecting vessels at least one dilution vessel is associated, which is situated under the collecting vessel or under the respective collecting vessel.

8. Apparatus according to claim 7, characterized in that the dilution vessels associated with a same collecting vessel can be alternatively connected with said same collecting vessel.

9. Apparatus according to one of claims 7 or 8, characterized in that the dilution vessel(s) is(are) connected with an outlet duct for the diluted substance, which is equipped with a discharge pump, and ends with at least one substance feed mouth installed outside the metering cabinet.

10. Apparatus according to one of the preceding claims, characterized in that inside said metering cabinet a manual metering/withdrawal unit is installed.

11. Apparatus according to one of the preceding claims, characterized in that the control means are installed inside said metering cabinet.

12. Apparatus according to one of the preceding claims, characterized in that the warehouse comprises a plurality of warehouse areas positioned at different levels, at least partially positioned at a lower level than of the collecting vessel(s).

13. Apparatus according to one of the preceding claims, characterized in that the peripheral metering valves of the group of metering valves are placed along the peripheral edge of the collecting vessel and can be orientated towards the interior of said collecting vessel.

14. Apparatus according to one of the preceding claims, characterized in that with said collecting vessel(s) and with said dilution vessel(s) a washing system is associated.

15. Apparatus according to one of the preceding claims, characterized in that said control means comprise a microprocessor device installed inside said metering cabinet.

# Fig.1

# Fig.2

# Fig.3

# Fig.4